# EUROPÄISCHE PATENTSCHRIFT

(11) **EP 2 328 707 B1**
(45) Veröffentlichungstag und Bekanntmachung des Hinweises auf die Patenterteilung: **23.12.2015**
(21) Anmeldenummer: 09776114.2
(22) Anmeldetag: 26.08.2009
(51) Int. Cl.: B23K 1/00, B23K 1/002, B23K 1/19, B23K 11/20

(54) **VERFAHREN ZUR HERSTELLUNG EINER FÜGEVERBINDUNG ZWISCHEN EINEM BLECHBAUTEIL AUS STAHL UND EINEM BLECHBAUTEIL AUS EINEM ALUMINIUMWERKSTOFF**
METHOD FOR PRODUCING A JOINT BETWEEN A SHEET-METAL COMPONENT OF STEEL AND A SHEET-METAL COMPONENT OF AN ALUMINIUM MATERIAL
PROCÉDÉ DE RÉALISATION D'UNE LIAISON SOUDÉE ENTRE UNE PIÈCE DE TÔLE EN ACIER ET UNE PIÈCE DE TÔLE EN MATÉRIAU D'ALUMINIUM

(30) Priorität: 28.08.2008 DE 102008044691
(43) Veröffentlichungstag der Anmeldung: 08.06.2011
(73) Patentinhaber: Volkswagen Aktiengesellschaft, 38440 Wolfsburg (DE)
(72) Erfinder: JÜTTNER, Sven, 38444 Wolfsburg (DE); GRAUL, Matthias, 38465 Brome (DE); STAUBACH, Marten, 01705 Pesterwitz (DE); NOACK, Thomas, 38448 Wolfsburg (DE)
(74) Vertreter: Scheffler, Jörg
(86) Internationale Anmeldenummer: PCT/DE2009/001192
(87) Internationale Veröffentlichungsnummer: WO 2010/022709

(56) Entgegenhaltungen:
- EP-A1- 0 965 411
- DE-A1- 3 304 556
- DE-A1- 4 324 349
- DE-A1- 19 714 755
- DE-A1- 19 846 705
- DE-A1-102005 038 493
- US-A1- 2008 063 889

## Beschreibung

Die Erfindung betrifft ein Verfahren zur Herstellung einer Fügeverbindung zwischen zumindest einem Blechbauteil aus Stahl, insbesondere aus einem formgehärteten hochfesten Stahl, und zumindest einem Blechbauteil aus einem Aluminiumwerkstoff, entsprechend dem Oberbegriff des Anspruchs 1, wie aus der DE 4324349 A1 bekannt.

Das thermische Fügen von Stahl und Aluminium wird durch unterschiedliche elektrische und thermische Eigenschaften, wie beispielsweise Dehnung, Leitfähigkeit und Schmelzpunkt, bestimmt. Das Hauptproblem beim thermischen Fügen besteht jedoch in der geringen Löslichkeit von Eisen und Aluminium füreinander, sodass sich an den Grenzflächen spröde intermetallische Phasen bilden, welche die Verbindungseigenschaften der Fügeverbindung negativ beeinflussen. Diese Phasen bilden sich bereits infolge von Diffusion ab einer Temperatur von 350 °C und sind daher prozesstechnisch nicht zu vermeiden.

Um die Ausbildung derartiger intermetallischer Phasen an den Grenzflächen zu verhindern, ist es bekannt, Zwischenelemente bzw. Zwischenschichten, insbesondere durch galvanisches Aufbringen, zwischen den Blechbauteilen vorzusehen. Außerdem können bimetallische Verbindungsstücke verwendet werden, um zwei Schweißverbindungen zwischen artgleichen Werkstoffen auszuführen.

Aus der DE 10 2005 038 493 A1 ist bereits ein Verfahren zum Löten von zwei Blechbauteilen aus einem Vergütungsstahl bekannt. Hierbei wird in einem 3-stufigen Prozess zunächst durch ein Plasmaverfahren ein Lotdepot auf einem der Blechbauteile aufgebracht und anschließend durch Warmpresslöten eine Verbindung zwischen den Blechbauteilen erzeugt, wobei das Herstellen der Fügeverbindung gleichzeitig mit einem Umformprozess einhergeht. Vor der Herstellung der Fügeverbindung bzw. vor dem Umformprozess werden die zu verbindenden Blechbauteile in einem Ofen auf eine Fügetemperatur von ca. 900 °C erwärmt und anschließend dann in einer Presse umgeformt und gefügt. Um eine prozesssichere Fügeverbindung herzustellen, muss eines der Blechbauteile eine AlSi-Beschichtung aufweisen. Außerdem ist für ein derartiges Verfahren ein erheblicher apparativer Aufwand erforderlich, da ein geeigneter Ofen für die Erwärmung der Blechbauteile und eine Presse für den Umformprozess vorhanden sein müssen.

Aus der DE 197 14 755 A1 ist ein Verfahren zum Verbinden von Blechbauteilen durch Löten mittels konduktiver Widerstandserwärmung unter Verwendung pulverförmiger Lote bekannt. Hierdurch können artgleiche oder verschiedene, nichtduktile Werkstoffe verbunden werden.

Die DE 103 23 719 B3 beschreibt ein Verfahren zum Verbinden eines Hohlprofils mit einem flächig anliegenden Bauteil mittels Löten, wobei das Lot in einer Mulde des Bauteils deponiert wird.

Weiterhin ist aus der DE 195 12 089 C1 ein Verfahren zur Verbindung von umformbaren Blechbauteilen, vorzugsweise Feinblechen, durch Löten bekannt, bei welchem ein Lotformteil in einen Hohlraum eingelegt wird.

Vor diesem Hintergrund liegt der Erfindung die Aufgabe zu Grunde, ein prozesssicheres Verfahren zum Fügen von Blechbauteilen aus Stahl und Aluminium zur Verfügung zu stellen.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zur Herstellung einer Fügeverbindung zwischen zumindest einem Blechbauteil aus Stahl, insbesondere aus einem formgehärteten hochfesten Stahl, und zumindest einem Blechbauteil aus einem Aluminiumwerkstoff vorgesehen, bei welchem zunächst ein Lotdepot durch einen Lichtbogen- oder Laserprozess transportsicher auf einem der Blechbauteile fixiert wird und anschließend das zwischen den Blechbauteilen angeordnete Lotdepot und die Blechbauteile durch Anlegen eines elektrischen Stromes und Aufbringen einer die Blechbauteile zusammenpressenden Druckkraft oder durch induktive Erwärmung im Bereich einer Fügestelle derart erwärmt werden, dass sich zwischen dem Blechbauteil aus Stahl und dem Lotdepot eine Lötverbindung und zwischen dem Blechbauteil aus Aluminiumwerkstoff und dem Lotdepot eine Schweiß- oder Lötverbindung ausbildet.

Durch die Applikation des Lotdepots mittels eines Lichtbogen- oder Laserprozesses können die Menge an Zusatzwerkstoff bzw. Lot und die Energieeinbringung sehr exakt gesteuert und reproduzierbare Lotdepots erzeugt werden. Die nachfolgende Erwärmung des Lotdepots und der Blechbauteile erfolgt vorzugsweise durch Widerstandserwärmung mittels beidseitig der Blechbauteile angeordneter Elektroden, welche die Blechbauteile zusammenpressen und einen elektrischen Strom einleiten. Moderne Widerstandspunktschweißmaschinen gewährleisten durch eine gesteuerte Veränderung der Stromstärke und der Druckkraft eine positive Beeinflussung der Fügeverbindung. Hieraus resultiert eine spezielle Verbindungscharakteristik, nämlich ein kombinierter Schweiß- bzw. Lötprozess zwischen dem Lotdepot einerseits und den Blechbauteilen andererseits, durch welchen eine reproduzierbare, stoffschlüssige Fügeverbindung für eine Stahl-Aluminium-Mischbauweise gewährleistet und auch die Ausbildung von spröden, intermetallischen Phasen an den Grenzflächen verhindert bzw. minimiert werden kann. Das erfindungsgemäße 2-stufige Verfahren eignet sich auch zur Verbindung von Blechbauteilen mit stark unterschiedlichen Blechdicken und zur Herstellung von 3-oder Mehrblechverbindungen. Weiterhin können neben unbeschichteten und verzinkten/verzinnten Stählen auch formgehärtete Stähle mit diffundierter Beschichtung sowie Stähle mit feueraluminierter Oberfläche und Galvanealed-Oberfläche verwendet werden. Durch die einfache Automatisierbarkeit des erfindungsgemäßen Verfahrens ist ein Einsatz in der Serienproduktion möglich.

Eine besonders vorteilhafte Weiterbildung des vorliegenden Verfahrens wird auch dadurch erreicht, dass das Lotdepot während des Aufbringens der Druckkraft in das Blechbauteil aus Aluminiumwerkstoff hineingedrückt wird. Durch die hieraus resultierende Verformung des Blechbauteils aus Aluminiumwerkstoff kann der Fügespalt zwischen den zu verbindenden Blechbauteilen minimal ausgebildet sein. Durch die Druckkraft und den elektrischen Strom kommt es je nach Schmelztemperatur des Lotes zum Aufschmelzen des Lotdepots. Weiterhin kann es durch das Hineindrücken bzw. durch die Verformung zu mechanischen Verklemmungen zwischen dem Aluminiumwerkstoff und dem Werkstoff des Lotdepots kommen, welche die Festigkeit der Fügeverbindung zusätzlich steigern. Durch die Verwendung von flachen Elektroden sind die Blechbauteile im Bereich der Fügestelle außenseitig eben ausgebildet und können im Sichtbereich eingesetzt werden.

Als besonders praxisnah und sehr vorteilhaft erweist es sich, dass das Lotdepot sowohl punkt- als auch linienförmig auf einem der Blechbauteile angeordnet werden kann. Durch die Zusammensetzung des Lotes, Einbrand und Parameter beim Aufbringen des Lotdepots sind eine breite Variation der Geometrie und eine metallurgische Beeinflussung der späteren Fügeverbindung zwischen den Blechbauteilen möglich. Durch diese metallurgische Beeinflussung der Fügeverbindung ist eine Anwendung des erfindungsgemäßen Verfahrens auch bei nicht punktschweißgeeigneten artgleichen Werkstoffen möglich. Durch die Anwendung von Loten können die Temperaturen beim Fügeprozess gesenkt und damit eine negative Beeinflussung der Grundwerkstoffe reduziert werden.

Die erfindugsgemäße Ausgestaltung sieht vor, dass eine Oberflächenschicht des Blechbauteils durch das Aufbringen des Lotdepots verdampft oder im Lotdepot gelöst wird. Hierdurch kann gewährleistet werden, dass das Lotdepot prozesssicher, reproduzierbar und mit einer guten Haftfestigkeit auf dem Grundwerkstoff des jeweiligen Blechbauteils fixiert wird.

Die Verbindungsfestigkeit der Fügeverbindung wird besonders vorteilhaft dadurch beeinflusst, dass als Lotdepot Al-, Zn-, Ni- oder Cu-Basis-Lote verwendet werden. Durch die Verwendung der angeführten Lotwerkstoffe kann das Lotdepot sowohl auf dem Blechbauteil aus Aluminiumwerkstoff als auch auf dem Blechbauteil aus Stahl transportsicher fixiert werden. Es ist erstmals möglich, ein Lotdepot auch auf der Oberfläche eines formgehärteten hochfesten Stahles anzubinden. Hierbei bieten Lotdepots aus AlSi, insbesondere durch die metallurgische Beeinflussung durch Si, den Vorteil einer verringerten Sprödphasenbildung zwischen dem Stahl und dem Aluminiumwerkstoff. Die Vorteile von ZnAI-Lot bestehen in der niedrigeren Schmelztemperatur und somit geringeren Wärmeeinbringung beim Löten. Bei der Verwendung beschichteter formgehärteter Stähle zeigen Cu- und Ni-Basis-Lote besonders gute Ergebnisse, da dadurch, dass die spröde Al-Si-Fe-Oberflächenschicht teilweise durchdrungen wird, eine gute Haftfestigkeit des Lotdepots gewährleistet werden kann. Auch unverzinkte Oberflächen können mittels Cu- und Ni-Basis-Loten deutlich besser benetzt werden.

Das erfindungsgemäße Verfahren ist insbesondere zur Herstellung von Karosseriebauteilen in Stahl-Aluminium-Mischbauweise anwendbar. Durch die Stahl-Aluminium-Mischbauweise ist es möglich, das den Kraftstoffverbrauch bestimmende Fahrzeuggewicht erheblich zu reduzieren. Als besonders effizient wird hierbei die Kombination eines Blechbauteils aus hochfestem formgehärteten Stahl mit einem Blechbauteil aus Aluminiumwerkstoff gesehen. Für diese Kombination standen bislang nur wenige Verbindungstechniken zur Verfügung. Das Kleben benötigt aufgrund unterschiedlicher Wärmedehnungen von Stahl und Aluminium ein zusätzliches Fügeverfahren zur Fixierung. Mechanische Fügeverfahren, die ein Vorlochen der Blechbauteile bedingen, wie beispielsweise Blindnieten, sind in der Serienproduktion nur sehr kostenintensiv umsetzbar. Die Verfahren Clinchen und Stanznieten können aufgrund der hohen Festigkeiten der formgehärteten Stähle nicht oder zumindest nur eingeschränkt eingesetzt werden.

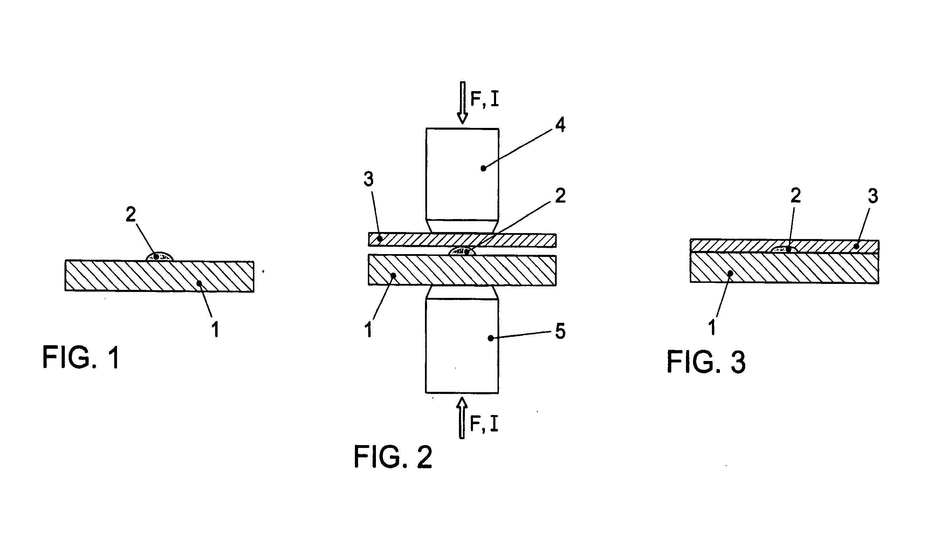

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1 bis Fig. 3: die erfindungsgemäßen Verfahrenschritte zur Herstellung einer Fügeverbindung zwischen zumindest einem Blechbauteil aus Stahl und zumindest einem Blechbauteil aus einem Aluminiumwerkstoff.

Figur 1 zeigt ein Blechbauteil 1 aus Stahl mit einem transportsicher fixierten Lotdepot 2. Das Lotdepot 2 wurde in einem vorangehenden Verfahrensschritt mittels eines Lichtbogen- oder Laserprozesses auf einer Oberfläche des Blechbauteils 1 in der geeigneten Form und Dosiermenge aufgebracht und dadurch derart fixiert, dass ein Abfallen während des Transpor tes zu einem nachfolgenden Arbeitsgang ausgeschlossen ist. Bei schwer benetzbaren Oberflächen, beispielsweise bei einem Blechbauteil 1 aus einem hochfesten formgehärteten Stahl, wird durch die Applikation mittels des Lichtbogen- oder Laserprozesses bereits eine tragfähige Anhaftung des Lotdepots 2 realisiert.

Figur 2 zeigt den Verfahrensschritt zur Herstellung der Fügeverbindung zwischen dem Blechbauteil 1 aus Stahl und einem Blechbauteil 3 aus einem Aluminiumwerkstoff. Zwei Elektroden 4, 5 pressen die beiden Blechbauteile mit einer definierten Druckkraft F zusammen. Anschließend wird über die Elektrode 4, 5 ein elektrischer Strom I in die Blechbauteile 1, 3 eingeleitet. Durch elektrische Widerstände in den Blechbauteilen 1, 3 erwärmt sich die Fügestelle. Das Lotdepot 2 erhöht ähnlich wie ein Schweißbuckel den Kontaktwiderstand, wodurch das Abschmelzen des Lotes und/oder die Anschmelzung des Blechbauteilwerkstoffes mit der niedrigeren Schmelztemperatur begünstigt werden. Hierbei bildet sich zwischen dem Lotdepot 2 und dem Blechbauteil 1 aus Stahl eine Lötverbindung und zwischen dem Lotdepot 2 und dem Blechbauteil 3 aus Aluminiumwerkstoff eine Schweiß- oder Lötverbindung aus. Ein zusätzlicher Einsatz von Kleb- oder/und Dichtstoffen zwischen den Blechbauteilen 1, 3 ist ebenfalls möglich.

Figur 3 zeigt die erfindungsgemäße Fügeverbindung zwischen dem Blechbauteil 1 aus Stahl und dem Blechbauteil 3 aus Aluminiumwerkstoff. Das Lotdepot 2 hat die Oberflächen der beiden Blechbauteilen 1, 3 benetzt und hält diese nach dem Abkühlen stoffschlüssig zusammen. Hierbei erreicht die Fügeverbindung zumindest die Festigkeit des Lotes oder die des Werkstoffes mit der niedrigeren Festigkeit.

## Patentansprüche

1. Verfahren zur Herstellung einer Fügeverbindung zwischen zumindest einem Blechbauteil (1) aus Stahl, insbesondere aus einem formgehärteten hochfesten Stahl, und zumindest einem Blechbauteil (3) aus einem Aluminiumwerkstoff, bei welchem zunächst ein Lotdepot (2) auf einem der Blechbauteile (1, 3) fixiert wird, und anschließend das zwischen den Blechbauteilen (1, 3) angeordnete Lotdepot (2) und die Blechbauteile (1, 3) durch Anlegen eines elektrischen Stromes (I) und Aufbringen einer die Blechbauteile (1, 3) zusammenpressenden Druckkraft (F) oder durch induktive Erwärmung im Bereich einer Fügestelle derart erwärmt werden, dass sich zwischen dem Blechbauteil (1) aus Stahl und dem Lotdepot (2) eine Lötverbindung und zwischen dem Blechbauteil (3) aus Aluminiumwerkstoff und dem Lotdepot (2) eine Schweiß- oder Lötverbindung ausbildet, **dadurch gekennzeichnet, dass** das Lotdepot (2) durch einen Lichtbogen- oder Laserprozess transportsicher auf einem der Blechbauteile (1, 3) fixiert wird, wobei eine Oberflächenschicht des Blechbauteils (1, 3) durch das Aufbringen des Lotdepots (2) verdampft oder im Lotdepot (2) gelöst wird.

2. Verfahren nach Anspruch 1, **dadurch gekennzeichnet, dass** das Lotdepot (2) während des Aufbringens der Druckkraft (F) in das Blechbauteil (3) aus Aluminiumwerkstoff hineingedrückt wird.

3. Verfahren nach den Ansprüchen 1 oder 2, **dadurch gekennzeichnet, dass** das Lotdepot (2) punkt- oder linienförmig auf einem der Blechbauteile (1, 3) angeordnet wird.

4. Verfahren nach zumindest einem der vorangehenden Ansprüche, **dadurch gekennzeichnet, dass** als Lotdepot (2) Al-, Zn-, Ni- oder Cu-Basis-Lote verwendet werden.

5. Verwendung eines Verfahrens gemäß einem der Ansprüche 1 bis 4 zur Herstellung von Karosseriebauteilen.

## Claims

1. Method for producing a joining connection between at least one sheet metal component (1) made of steel, in particular of a shape-hardened high-strength steel, and at least one sheet metal component (3) made of an aluminium material, in which first a solder deposit (2) is fixed to one of the sheet metal components (1, 3), and then the solder deposit (2) arranged between the sheet metal components (1, 3) and the sheet metal components (1, 3) are heated by applying an electric current (I) and by applying a compressive force (F) pressing the sheet metal components (1, 3) together, or are heated by inductive heating in the region of a joining location, such that a welded or soldered connection forms between the sheet metal component (1) made of steel and the solder deposit (2), and between the sheet metal component (3) made of aluminium material and the solder deposit (2), **characterized in that** the solder deposit (2) is fixed securely for transport to one of the sheet metal components (1, 3) by means of an electric arc process or a laser process, wherein a surface layer of the sheet metal component (1, 3) is vaporized by the application of the solder deposit (2) or is dissolved in the solder deposit (2).

2. Method according to Claim 1, **characterized in that** the solder deposit (2) is pressed into the sheet metal component (3) made of aluminium material during application of the compressive force (F).

3. Method according to Claim 1 or 2, **characterized in that** the solder deposit (2) is arranged in the form of spots or lines on one of the sheet metal components (1, 3).

4. Method according to at least one of the preceding claims, **characterized in that** Al-, Zn-, Ni- or Cu-based solders are used for the solder deposit (2).

5. Use of a method according to one of Claims 1 to 4 for producing bodywork components.

## Revendications

1. Procédé de fabrication d'une liaison soudée entre au moins un composant en tôle d'acier (1), en particulier d'acier hautement résistant trempé, et au moins un composant en tôle de matériau à base d'aluminium (3), dans lequel un dépôt de brasure (2) est d'abord fixé sur l'un des composants en tôle (1, 3), et ensuite le dépôt de brasure (2) disposé entre les composants en tôle (1, 3) et les composants en tôle (1, 3) sont chauffés par application d'un courant électrique (I) et application d'une force de compression (F) comprimant les composants en tôle (1, 3) ou par chauffage inductif dans la région d'une zone de soudure, de telle sorte qu'entre le composant en tôle d'acier (1) et le dépôt de brasure (2) soit réalisée une liaison brasée et qu'entre le composant en tôle de matériau à base d'aluminium (3) et le dépôt de brasure (2) soit réalisée une liaison soudée ou brasée, **caractérisé en ce que** le dépôt de brasure (2) est fixé par un processus à arc électrique ou un processus laser de manière sécurisée pour le transport sur l'un des composants en tôle (1, 3), une couche de surface du composant en tôle (1, 3) étant évaporée par l'application du dépôt de brasure (2) ou étant dissoute dans le dépôt de brasure (2).

2. Procédé selon la revendication 1, **caractérisé en ce que** le dépôt de brasure (2) est imprimé dans le composant en tôle de matériau à base d'aluminium (3) pendant l'application de la force de compression (F).

3. Procédé selon les revendications 1 ou 2, **caractérisé en ce que** le dépôt de brasure (2) est disposé ponctuellement ou linéairement sur l'un des composants en tôle (1, 3).

4. Procédé selon au moins l'une quelconque des revendications précédentes, **caractérisé en ce que** l'on utilise en tant que dépôt de brasure (2) des brasures à base d'Al, de Zn, de Ni ou de Cu.

5. Utilisation d'un procédé selon l'une quelconque des revendications 1 à 4 pour la fabrication due composants de carrosserie.
